# EUROPEAN PATENT APPLICATION

(11) **EP 1 860 847 A1**
(43) Date of publication of application: **28.11.2007**
(21) Application number: 07004879.8
(22) Date of filing: 09.03.2007
(51) Int. Cl.: H04L 29/08

(54) **Location based filtering of mobile casino applications**

(30) Priority: 18.12.2006 IL 18014806
(71) Applicant: Wisebox Technologies Ltd., 65785 Tel Aviv (IL); Tal, Sharon, Holon (IL)
(72) Inventor: Wisebox Technologies Ltd., 65785 Tel Aviv (IL); Tal, Sharon, Holon (IL)
(74) Representative: Esteban Perez-Serrano, Maria Isabel

(57) **Abstract**

The present invention is directed to a method for enabling or disabling the access or a cellular phone (2) user to a casino gaming server (10) according to his geographic location. The cellular phone (2) user is initially directed to a filtering server (7), which obtains the geographic location of the cellular phone user (2). This geographic location is compared to a dynamic list of areas stored in, or accessed by, the filtering server (7), for determining whether the user is authorized to participate in a desired online casino game within this geographic location. Then access of the cellular phone (2) user to the casino server (10) is enabled or disabled according to the comparison results.

## Description

### OBJECT OF THE INVENTION

The present invention relates to the field of cellular location based applications. More specifically, this invention relates to a method of conveniently enabling or disabling cellular casino applications in accordance with the geographic location of the user, based on various predetermined location-related criteria

### BACKGROUND OF THE INVENTION

In the past few years there has been a great development in the field of online casino games, and different types of casino games are offered over the internet. The latest stage of development is the transformation of the gaming activity from desktop computers to mobile cellular phones.

However, different states have different laws regarding the legality of online casino games. In some states, such games are forbidden altogether, in others casino games are allowed only in specific areas, and some states allow all such casino games in their entire legal territory. Since the law in certain locations forbids participating in certain (or all) casino games, there must be some type of control over the location of the users trying to remotely access mobile casino gaming servers. It should be noted that the "gaming server" does not only performs the "game-logic" steps, but all the related functionalities needed on the server side, such as communication, security, login procedures, etc.

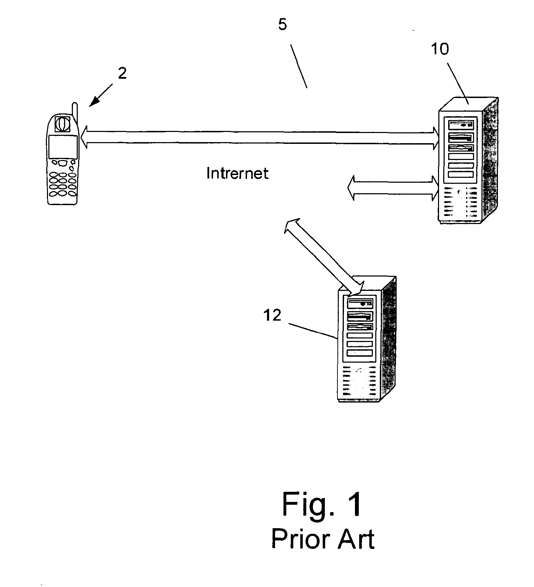

A schematic outline of the basic approach known today is shown in Fig. 1. The user requests access to a certain casino gaming server (10) using a client-side application installed in his cellular phone (2). The cellular phone (2) contacts the casino gaming server (10) and before performing any other gaming actions, the casino gaming server (10) requests information regarding the location of the user's cellular phone (2) from either an external location service (12) or from a similar service that was programmed into the casino gaming server itself. Once the casino gaming server (10) determines the location of the cellular client, it decides according to the chosen criteria whether or not the user is authorized to participate in the games provided by the server, and continues to operate accordingly.

The main drawback of the method described hereinabove is that it requires the casino gaming server to perform the location determination task. As known to those familiar with the art, casino gaming servers tend to be heavily loaded with computational gaming tasks, which tend to happen simultaneously. In any case, the extra burden of location determination is problematic for the casino servers and also complicates programming of the casino gaming server.

Therefore it would be highly desirable to develop a method so that casino companies and operators would not have to deal with the task of location determination, and authorization or blocking of users according to their location, in order to abide different laws and other filtering criteria concerning casino activity.

It is the object of the present invention to provide a method by which the location of cellular users wishing to connect to a casino gaming server will not be determined by the casino gaming server.

It is a further object of the present invention that the users be externally classified as "allowed" or "blocked" according to their geographic location.

Further purposes and advantages of this invention will become apparent as the description proceeds.

### DESCRIPTION OF THE INVENTION

The present invention is directed to a method for enabling or disabling the access of a cellular phone user to a casino gaming server according to his geographic location. The cellular phone user is initially directed to a filtering server, which obtains the geographic location of the cellular phone user. This geographic location is compared to a dynamic list of areas stored in, or accessed by, the filtering server, for determining whether the user is authorized to participate in a desired online casino game within this geographic location. Then access of the cellular phone user to the casino server is enabled or disabled according to the comparison results.

The cellular phone user may be directed to the filtering server by a specific software application installed in the cellular phone or by the URL of the casino gaming server. The geographic location of the cellular phone user may be determined by location data, such as GPS or JSR-179 data, found on the cellular phone, whenever the cellular phone supports an appropriate location protocol or by requesting location information from remote services, e.g., from the cellular provider's location determination system, which is available through the filtering server.

The filtering server may provide the disabled user with information regarding the nearest areas in which gambling is allowed and regarding distances and directions by which he can reach the areas in which the gambling is allowed.

The location of the cellular phone user may be periodically monitored for determining whether he has moved from an area in which gambling is allowed to one in which it is forbidden, or vice versa, upon which the filtering server notifies the cellular phone user of his new status, and enables/disables his access accordingly. The client-side application or the casino site may offer the cellular phone user the option of either "play for real" or "play for fun", whereas the filtering server begins the process of location determination only if "play for real" option is selected, and otherwise is inactive.

All the above and other characteristics and advantages of the invention will be further understood through the following illustrative and non-limitative description of preferred embodiments thereof.

### DESCRIPTION OF THE DRAWINGS

Fig. 1 shows a schematic overview of the basic method by which cellular users connect to a casino database; and
Fig. 2 shows an outline of the method of the present invention.

### DETAILED DESCRIPTION OF THE INVENTION

In view of the drawbacks of conventional methods, as described hereinabove, there is a need for an improved method by which cellular users can be classified according to their geographic location, and then allowed, or blocked from playing online (cellular) casino games.

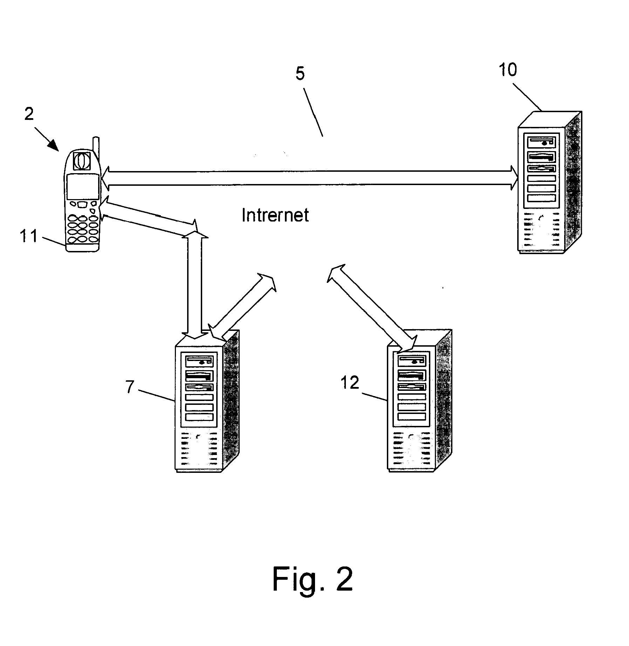

The present invention discloses a method by which the burden of location determination and the enabling/disabling of users in light thereof, lay upon a filtering server and an additional software component, easily integrated into the client-side application installed in the cellular phone. If and only if users are classified as "allowed" according to their geographic locations by the filtering server, they are allowed to connect to the casino gaming server, according to the original communication flow. An overview of the method of the present invention is illustrated in Fig. 2.

As known to those familiar in the art, there are two methods by which a cellular user may access a casino gaming server: 1. by using the cellular Wireless Application Protocol (WAP- which is a set of communication protocols to standardize the way that wireless devices, such as cellular telephones can be used for Internet access) service via the casino site URL; and 2. by using a specific software application downloaded to the cellular phone, enabling the user a simple access to the casino gaming server, and a more convenient user-interface.

According to the method proposed by the present invention, as illustrated in Fig. 2, the specific software component (11) related to hereinabove initially contacts a filtering server (7) through the Internet (5), and also attaches any location information found on the cellular phone (2) by the JSR-179 protocol (which is a Location API for Java2 platform). If no such information is found on the cellular phone, the filtering server (7) uses its own remote location services, for example, from the cellular provider's database. This way, the filtering server (7) can support older models of cellular phones that do not comply with JSR-179 protocol.

Another embodiment of the present invention relates to instances when the cellular phone (2) does not comprise the client-side software application (11) described hereinabove, so that the user accesses the casino gaming server (10) via its URL, using the WAP service. In this embodiment, the relevant code behind the casino's URL initially contacts the filtering server (7), on which the user's location is determined as described above.

Once the user's geographic location is determined, the information is compared to a list of areas, found on the filtering server (7). If the user is in a location in which the casino game is authorized, he is allowed to connect to the casino gaming server (10), on which he can participate in casino games as originally intended.

In other cases, when the user is in a location where the casino gaming is forbidden, he is blocked from entering the casino gaming server. In one embodiment of the present invention the user receives a message generated by the filtering server (7) stating that he is currently in a forbidden zone, and thus is unauthorized to access the casino gaming server. In another embodiment of the present invention the filtering server (7) provides the user with information regarding the nearest areas in which gambling is allowed, preferably including distances and directions to reach those areas. In a further embodiment of the present invention the filtering server (7) continues to monitor the location of the user, and informs him once he enters an area in which casino games are allowed.

According to an embodiment of the present invention, the location of the user is periodically monitored even after he has been authorized to communicate with the casino gaming server (10). This will allow the system of the filtering server (7) to notify him when he exits an area in which gambling is allowed into an area in which gambling is forbidden. The system further blocks the player from continuing to play the games offered on the casino gaming server.

According to a further embodiment of the present invention two versions of the casino game are initially offered to the user. The first version is an unrestricted "play for fun" version, which can be played disregarding the area in which the user is located. The second version is a "play for real" version, which is either enabled or disabled according to the geographic location of the user, as described hereinabove. It should be noted, that the filtering component and the filtering server (7) are activated only if the "play for real" option is chosen. For all other options, the component remains "transparent" to the user. During this process, the filtering server (7) interacts only with the client-side application installed in the cellular phone.

Although embodiments of the invention have been described by way of illustration, it will be understood that the invention may be carried out with many variations, modifications, and adaptations, without departing from its spirit or exceeding the scope of the claims.

## Claims

1. A method for enabling or disabling the access of a cellular phone user to a casino gaming server according to his geographic location , comprising:
a. Initially directing said cellular phone user to a filtering server;
b. Obtaining the geographic location of said cellular phone user by said filtering server;
c. Comparing said geographic location to a dynamic list of areas stored in, or accessed by, said filtering server, for determining whether said user is authorized to participate in a desired online casino game within said geographic location; and
d. Enabling or disabling the access of said cellular phone user to said casino server according to the comparison results.

2. The method of claim 1 wherein the cellular phone user is directed to the filtering server by:
a. A specific software application installed in said cellular phone; or
b. The URL of the casino gaming server.

3. The method of claim 1 wherein the geographic location of the cellular phone user is determined by:
a. Location data found on said cellular phone, whenever said cellular phone supports an appropriate
b. Location protocol; or
c. Requesting location information from remote services available through the filtering server.

4. The method of claim 3 wherein the location data found on the cellular phone is selected from the group comprising:
- GPS data;
- JSR-179 data.

5. The method of claim 3 wherein the remote service is the cellular provider's location determination system.

6. The method of claim 1 wherein the filtering server provides the disabled user with information regarding the nearest areas in which gambling is allowed.

7. The method of claim 6 wherein the filtering server provides the disabled user with information regarding distances and directions by which he can reach the areas in which the gambling is allowed.

8. The method of claim 1 wherein the location of the cellular phone user is periodically monitored for determining whether he has moved from an area in which gambling is allowed to one in which it is forbidden, or vice versa, upon which the filtering server notifies said cellular phone user of his new status, and enables/disables his access accordingly.

9. The method of claim 1 wherein the client-side application offers the cellular phone user the option of either "play for real" or "play for fun", whereas the filtering server begins the process of location determination only if "play for real" option is selected, and otherwise remains inactive.
